# EUROPÄISCHE PATENTSCHRIFT

(11) **EP 1 194 312 B1**
(45) Veröffentlichungstag und Bekanntmachung des Hinweises auf die Patenterteilung: **19.10.2005**
(21) Anmeldenummer: 00943851.6
(22) Anmeldetag: 21.06.2000
(51) Int. Cl.: B60N 3/10

(54) **HALTERUNGSVORRICHTUNG FÜR GEFÄSSE IN KRAFTFAHRZEUGEN**
CONTAINER HOLDER IN MOTOR VEHICLES
DISPOSITIF DE SUPPORT DE RECIPIENTS POUR AUTOMOBILES

(30) Priorität: 24.06.1999 DE 19929117
(43) Veröffentlichungstag der Anmeldung: 10.04.2002
(73) Patentinhaber: KTSN Kunststofftechnik Sachsen GmbH & Co. KG, 01796 Pirna (DE)
(72) Erfinder: MÜLLER, Roland, D-01458 Ottendorf-Okrilla (DE); JÄCKEL, René, D-02692 Doberschau (DE); SCHUPP, Steffen, D-01099 Dresden (DE)
(74) Vertreter: Tragsdorf, Bodo
(86) Internationale Anmeldenummer: PCT/EP2000/005731
(87) Internationale Veröffentlichungsnummer: WO 2001/000439

(56) Entgegenhaltungen:
- WO-A1-98/41421
- DE-A1- 19 952 268
- DE-U1- 29 813 131
- US-A- 4 821 529
- US-A- 5 704 579
- US-A- 5 709 105

## Beschreibung

Die Erfindung betrifft eine Halterungsvorrichtung für Gefäße, insbesondere Getränkedosen oder -flaschen, in Kraftfahrzeugen.

Im Automobilbau gehört es bereits zum Standard der Innenausstattung, daß entsprechende Getränkedosenhalter vorgesehen sind, die den Personen im Fahrzeug während der Fahrt die Einnahme von Getränken erleichtern sollen, indem die Trinkgefäße, Dosen, Flaschen oder Becher in speziell dafür geeigneten Halterungen abgestellt bzw. aufbewahrt werden können. Aus der Praxis sind vor allem Getränkedosenhalter bekannt, die im Cockpitbereich des Fahrzeuges versenkbar angeordnet sind, z.B. durch Schwenk-oder Hubbewegung.
Die durch Hubbewegung bekannten Halterungsvorrichtungen bestehen aus einem Gehäuse und einem aus dem Gehäuse aus- und einfahrbaren Schlitten, der mit mindestens einer Aufnahme für das zu haltende Gefäß verbunden ist. Zur Lagefixierung des abgestellten Gefäßes ist bei mehren bekannten Lösungen noch ein Abstützelement vorgesehen, das z.B. als schwenkbarer Bügel ausgebildet sein kann. Die Aufnahmen für das zu haltende Gefäß oder auch für mehrere Gefäße sind häufig als stabiles Kunststoffbauteil als Bestandteil des Schlittens ausgebildet und weisen entsprechende Öffnungen zum Einstellen der Gefäße auf. Das Sortiment an Getränkedosen und Getränkeflaschen ist sehr vielseitig. Die jeweiligen Behältnisse unterscheiden sich vor allem in ihrem Außendurchmesser. Trinkbecher besitzen im allgemeinen eine sich nach unten konisch verjüngende äußere Form.
In der Praxis ist es jedoch wünschenswert, daß eine Halterungsvorrichtung für im Durchmesser und in ihrer äußeren Form unterschiedliche Gefäße geeignet ist und eine sichere Halterung für diese gewährleistet. Hierzu sind bereits verschiedene Lösungen bekannt. In der DE 195 27 918 A1 ist eine Halterungsvorrichtung mit einer schwenkbaren Konsole zur Aufnahme von Gefäßen beschrieben, bei der der Innenraum zur Aufnahme des Gefäßes von einem elastischen Band durchgriffen ist. Diese Lösung hat den Nachteil, daß beim Einsetzen des Gefäßes dieses in Schräglage gebracht werden muß, um das elastische Element in die erforderliche Richtung zu bewegen, damit das Gefäß eingesetzt werden kann. Beim Einsatz eines bereits mit einem Getränk gefüllten Trinkbechers kann diese Lösung zu unerwünschten Nebeneffekten führen. Aus der EP 0 748 717 A1 ist eine Lösung bekannt, bei der unterhalb einer größeren Öffnung einer Konsole ein umlaufendes Band mit im Durchmesser verschiedenen Öffnungen angeordnet ist, die wahlweise in Deckung mit der größeren Öffnung gebracht werden können. Diese Ausführung ist in ihrer Handhabung sehr aufwendig und nur für Gefäße geeignet, für die in dem Band die passenden Öffnungen vorhanden sind. Bekannt Ist auch (DE 44 41 265 A1) an einer herausfahrbaren Lade bzw. Konsole seitlich nach außen zeigende halbkreisförmige Öffnungen anzuordnen, wobei an beiden Seiten der Lade unter Federspannung stehende, verschwenkbare Seitenarme angeordnet sind, durch die das eingesetzte Gefäß festgeklemmt wird. Diese Halterungsvorrichtung ist In ihrer Herstellung sehr aufwendig. Bei im Durchmesser relativ großen Gefäßen liegt der Halterungsarm nur an einem Teilbereich des Außenumfanges des Gefäßes an, so daß keine sichere Halterung gewährleistet ist.
Aus der DE 195 43 608 A1 ist eine Vorrichtung zum Halten von Getränkebehättern bekannt, bei der in einem Gehäuse zwei teleskopartige Einsätze angeordnet sind, die aus dem Gehäuse geschoben werden und als Auflagefläche für das Gefäß dienen. Das Gefäß wird mittels klappbarer Haltebacken In der Gebrauchslage fixiert. Durch ein weiteres Herausziehen des vorderen Einsatzes kann eine entsprechende Durchmesseranpassung für größere Gefäße bewirkt werden. Die Lagefixierung des Gefäßes erfolgt im Wesentlichen durch die unter Federspannung stehenden Haltebacken. Diese Halterung ist nur für in der Höhe niedrige Gefäße geeignet, wie z.B. Tassen. Bei höheren Gefäßen besteht die Gefahr, daß diese in Ihrer Lage nicht ausreichend gesichert sind. Außerdem ist diese Vorrichtung in Ihrer Herstellung sehr aufwendig.
Eine Halterungsvorrichtung für Gefäße in Kraftfahrzeugen, bestehend aus einem Aufnahmebehälter für das einzustellende Gefäß, ist in der DE 195 33 304 A1 beschrieben. Der Aufnahmebehälter besteht aus einem rohrartigen Haltetell aus sehr welchem Kunststoff, das mindestens eine radiate, das Gefäß aufnehmende Einbuchtung aufweist, die umlaufend oder zumindest abschnittsweise ausgebildet ist.
Somit besitzt der Aufnahmebehälter eine in ihrer Aufweitung veränderbare Wand, die mit dem Gefäß in Berührungskontakt steht. Die Aufweitung der flexiblen Wand wird durch einen Federring realislert. Diese Halterungsvorrichtung ist in ihrer Herstellung sehr aufwendig. Außerdem besteht die Gefahr, daß bei häufigem Gebrauch die Wand des Halters beschädigt wird, da beim Einstellen des Gefäßes die vorhandene Vorspannung überwunden werden muß.
Aus der WO 98/41421 A ist eine Haiterungsvorrichtung bekannt, die einen zylindrischen Aufnahmebehälter mit einer stabilen äußeren Wand besitzt, wobei zur Lagefixierung des eingestellten Gefäßes an der innenwand des Aufnahmebehälters mit Druckluft betätigte Mittel in Form einer ringförmigen Luftkammer befestigt sind. Dieses Mittel ist als Ersatz für Blattfedern vorgesehen.

Bekannt ist auch ein aufblasbarer, aus Kunststoff-Folienteilen zusammengesetzter Halter (DE 298 13 131 U1), der an einer geeigneten Stelle im Fahrzeuginnenraum befestigbar und bei Nichtgebrauch zusammenfaltbar ist.

Der Erfindung lag die Aufgabe zugrunde, eine Halterungsvorrichtung für Gefäße, insbesondere für Getränkedosen oder -flaschen oder -becher, zu schaffen, die eine sichere Halterung für Gefäße unterschiedlicher Durchmesser und/oder Form gewährleistet, sich durch einen geringen Herstellungsaufwand auszeichnet.

Erfindungsgemäß wird die Aufgabe durch die im Anspruch 1 angegebenen Merkmale gelöst. Geeignete Ausgestaltungsvarianten sind Gegenstand der Ansprüche 2 bis 12. Die vorgeschlagene Halterungsvorrichtung zeichnet sich durch einen einfachen Aufbau aus und kann sehr kostengünstig hergestellt werden. Sie gewährleistet eine sichere Halterung von Gefäßen mit unterschiedlichen Außendurchmessern, in einem Schwankungsbereich von ca. 25 bis 35 mm. Die Halterungsvorrichtung kann z.B. problemlos in der Mittelkonsole eines PKW eingebaut werden. Am wirkungsvollsten ist es, wenn als fluides Medium eine Flüssigkeit eingesetzt wird. Durch entsprechende Volumenveränderung der Ausgleichskammer, die nach dem Einstellen des Gefäßes in den Aufnahmebehälter durch einen Taster ausgelöst wird, durch den eine entsprechende Stelleinheit betätigt wird, strömt Flüssigkeit in die in dem Aufnahmebehälter angeordnete schlauchartige Folie. In den Bereichen zwischen den Stegen, hinter denen die Folie eingelegt und gehalten ist, wird die Folie infolge des statischen Innendruckes durch die eingeströmte Flüssigkeit nach innen, in Richtung zu dem eingestellten Gefäß ausgebeult und legt sich an die Außenwand des Gefäßes an und sichert somit dessen sicheren Halt. Der Abstand zwischen den Stegen und der Wand des Aufnahmebehälters ist so bemessen, daß nach dem Einlegen der Schlauchfolie noch eine ausreichende Flüssigkeitsmenge durch die Schlauchfolie strömen kann.
Das Gefäß kann problemlos aus dem Aufnahmebehälter herausgenommen und wieder in diesen eingestellt werden. Die Kunststoffschlauchfolie besteht aus einem reißfesten Material, so daß eine Gefahr von Beschädigungen der Folie, z.B. beim Abstellen von Getränkedosen ausgeschlossen wird.
Der Aufnahmebehälter und die Ausgleichskammer können als Kunststoffbauteil im Spritzgießverfahren sehr kostengünstig hergestellt werden. In das vollhydraulische System - Ausgleichskammer und schlauchartige Folie - kann auch an Stelle des Verbindungskanals ein Ventil eingebunden sein, wodurch das Zu- bzw. Abströmen der Flüssigkeit besser gesteuert werden kann, wie z.B. durch schnelleres Einströmen in den Schlauch und langsameres Ausströmen.
Eine andere Variante besteht darin, daß die innere Wand aus mehreren flexiblen Wandabschnitten oder deformierbaren Bereichen besteht, wobei in den so gebildeten Hohlraum ein fluides Medium aus der Ausgleichskammer eingeleitet wird, wodurch die flexiblen Wandabschnitte nach außen, in Richtung zu dem einzustellenden bzw. eingestellten Gefäß aufgeweitet werden und dessen sichere Halterung bewirken.
Im völlig entspannten Zustand, wenn die Flüssigkeitsmenge nahezu vollständig aus dem Hohlraum in die Ausgleichskammer verdrängt ist, kann in den Aufnahmebehälter ein Gefäß mit maximalem Außendurchmesser eingestellt werden. Dieser entspricht dann in etwa dem Innendurchmesser der Öffnung des Aufnahmebehälters. Bevorzugterweise hat der Aufnahmebehälter eine zylindrische Form. Der Aufnahmebehälter kann aber beispielsweise auch eine quadratische, rechteckförmige oder elliptische Querschnittsform aufweisen.
Die Ausgleichskammer kann in Abhängigkeit von den jeweiligen Einbauvoraussetzungen verschiedenartig ausgebildet sein, z.B. als faltbarer Balgen.
Es besteht auch die Möglichkeit, mehrere Ausgleichskammern anzuordnen.
Vorteilhaft ist, wenn beim Einsatz einer Schlauchfolie deren in Richtung zu dem Gefäß zeigende Seite mit bereits vorgefertigten Ausbuchtungen bzw. aufgeweiteten Bereichen versehen ist. Die Schlauchfolie kann aus zwei verschiedenen Kunststofffolien gleicher oder unterschiedlicher Materialeigenschaften bestehen, wobei in der Folie, die mit dem Gefäß in Berührung kommt, bereits die erforderlichen Ausbuchtungen, z.B. durch Tiefziehen, eingeformt sind. Danach werden die beiden Folien zu einem Schlauch zusammengeschweißt.
Anstelle einer Schlauchfolie kann auch ein durch Extrusionsblasen oder Spritzgießen hergestellter Hohlkörper eingesetzt werden, der aus einzelnen Formteilen besteht, die mediendicht zusammengefügt werden. Die Formteile besitzen Abschnitte unterschiedlicher Wanddicken, wobei die mit dem einzustellenden Gefäß in Berührung gelangenden Abschnitte dünnwandiger und flexibel ausgebildet sind. Als Werkstoff für die Hohlkörperformteile wird ein elastischer thermoplastischer Kunststoff eingesetzt. Zur Erzeugung eines geringen statischen Druckes ist es zweckmäßig, wenn die beweglichen Bauteile zur Veränderung des Volumens in der Ausgleichskammer mechanisch belastet werden, z.B. durch eine Druckfeder.

Die Erfindung soll nachstehend an einem Beispiel näher erläutert werden. In der zugehörigen Zeichnung zeigen
- Fig. 1: eine Halterungsvorrichtung in perspektivischer Darstellung,
- Fig. 2: die Halterungsvorrichtung gemäß Fig. 1 als Schnittdarstellung,
- Fig. 3: die Halterungsvorrichtung gemäß Fig. 1 im entspannten Zustand als Schnittdarstellung und
- Fig. 4: eine Halterungsvorrichtung als transparente Schnittdarstellung.

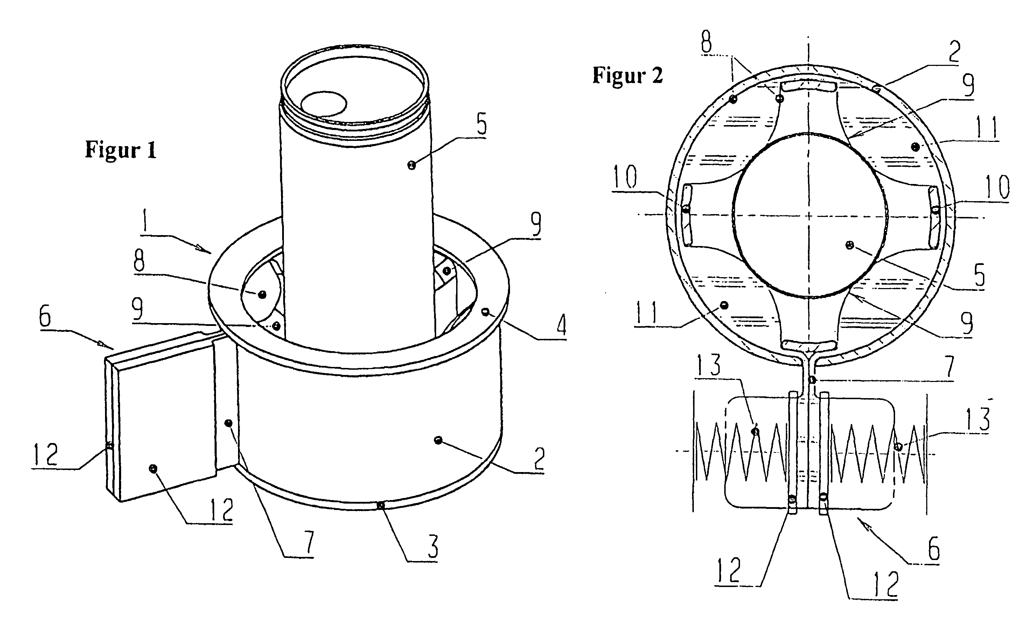

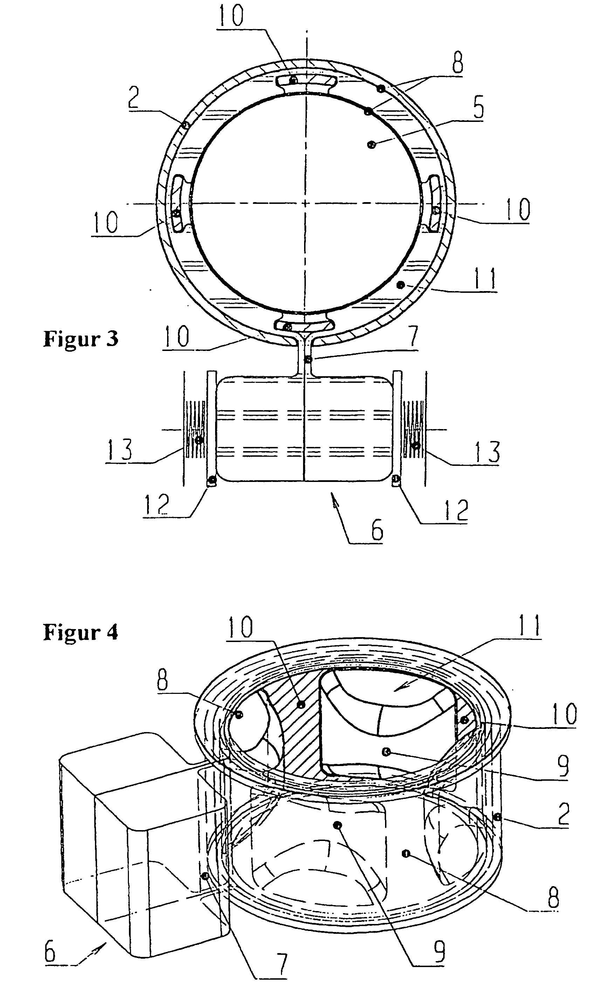

Die Halterungsvorrichtung besteht aus einem zylindrischen Aufnahmebehälter 1 für ein Trinkgefäß, eine Dose 5 mit einem Außendurchmesser von ca. 53 mm. Der Innendurchmesser des Aufnahmebehälters 1 ist wesentlich größer als der Außendurchmesser der Dose 5. Der Aufnahmebehälter 1 besteht aus Kunststoff und besitzt eine stabile Außenwand 2 und einen Boden 3 auf dem die Dose 5 abgestellt ist.
Der Aufnahmebehälter 1 ist an seinem oberen Ende mit einem umlaufenden Rand 4 versehen. Der Aufnahmebehälter 1 ist ferner über einen Verbindungskanal 7 mit einer in ihrem Volumen veränderbaren Ausgleichskammer 6 verbunden, die, wie in Fig.2 gezeigt, als Balgen ausgebildet ist. Dieser besitzt zwei stabile Schmalseitenwände 12, die jeweils durch eine Druckfeder 13 unter mechanischer Belastung stehen, zur Erzeugung eines geringen statischen Druckes auf die Flüssigkeit des vollhydraulischen Systems. Am Boden 3 des Aufnahmebehälters 1 sind vier nach oben verlaufende Stege 10 in einem geringen Abstand zur Innenseite der Behälterwand 2 im gleichen Abstand zueinander angeordnet. Diese erstrecken sich nahezu bis an die Unterseite des umlaufenden Randes 4, können in ihrer Höhe aber auch kürzer ausgebildet sein. Der Verbindungskanal 7 ist mediendicht mit einer schlauchartigen Kunststoffolie 8 zur Bildung des vollhydraulischen Systems verbunden. Über eine nicht näher dargestellte verschließbare Öffnung wird die erforderliche Flüssigkeitsmenge, z. B. ein Wasser-Alkohol-Gemisch, in die Ausgleichskammer 6 gefüllt. Die schlauchartige Kunststoffolie 8 wird hinter die Stege 10, an der Innenseite der Behälterwand 2 anliegend, eingelegt und durch die relativ breiten Stege 10 in der gewünschten Lage fixiert. An der Innenseite der schlauchartigen Folie 8, also die Seite, die in Richtung zu der Dose 5 zeigt, sind bereits Ausbuchtungen 9, Taschen, Noppen oder dgl. in bestimmten Abständen eingeformt, die sich in Einbaulage in den Bereichen zwischen den Stegen 10 befinden. In den Figuren 2 und 4 sind diese vier Ausbuchtungen 9 deutlich zu sehen. Nach dem Einstellen der Dose 5 in den Aufnahmebehälter 1 werden durch Betätigen eines Bedienknopfes die Seitenwände 12 der Ausgleichskammer 6 bis auf eine bestimmte Weglänge zusammengefahren, wodurch deren Volumen verringert wird und die Flüssigkeit in den Hohlraum 11 der schlauchartigen Folie 8 strömt. Dabei bildet sich hinter den vorgeformten Ausbuchtungen 9 ein Flüssigkeitspolster und die Bereiche mit den Ausbuchtungen 9 werden aufgeweitet und gegen die Außenwand der Dose 5 gedrückt, wie in Fig. 2 gezeigt. Dadurch wird die Dose 5 in ihrer Einstellage sicher gehalten. Die Dose 5 kann problemlos aus dem Aufnahmebehälter herausgenommen und wieder eingestellt werden, ohne das hydraulische System zu verändern. Beim Einstellen eines im Außendurchmesser anderen Gefäßes ist das hydraulische System zu betätigen, wobei durch Vergrößerung des Volumens der Ausgleichskammer 6 Flüssigkeit aus dem Hohlraum 11 der schlauchartigen Folie 8 in diese abströmt und dadurch der Öffnungsbereich für das einzustellende Gefäß 5 vergrößert wird, wie dies in Fig. 3 gezeigt ist. Im vorgegebenen Durchmesserbereich von z. B. ca. 50 bis 75 mm können somit Dosen, Becher oder Flaschen mit verschiedenen Außendurchmessern innerhalb dieses Bereiches sicher abgestellt werden. Die Halterungsvorrichtung ist sehr bedienerfreundlich und verursacht in ihrer Herstellung nur einen geringen Aufwand.

## Patentansprüche

1. Halterungsvorrichtung für Gefäße, insbesondere Getränkedosen, -flaschen oder -becher, in Kraftfahrzeugen, bestehend aus einem Aufnahmebehälter (1) für das einzustellende Gefäß (5), mit einer stabilen äußeren Wand (2) und einer flexiblen, in ihrer Aufweitung veränderbaren inneren Wand (8, 9), die mit dem aufzunehmenden Gefäß (5) in Berührungskontakt steht, und zwischen der flexiblen inneren Wand (8, 9) und der äußeren Wand (2) des Aufnahmebehälters (1) ein mediendichter Hohlraum (11) gebildet ist oder die innere Wand (8, 9) als umhüllter mediendichter Hohlraum (11) ausgebildet ist, **dadurch gekennzeichnet, daß** der Hohlraum (11) ständig mit mindestens einer in Ihrem Volumen veränderbaren Ausgleichskammer (6) verbunden ist, wobei die Ausgleichskammer (6) und der Hohlraum (11) ein geschlossenes System bilden, und sich in der Ausgleichskammer (6) und/oder dem Hohlraum (11) eine definierte Menge eines fluiden Mediums befindet, das zur Einstellung unterschiedlicher Aufweitungen der inneren Wand (8, 9) in die Ausgleichskammer (6) oder den Hohlraum (11) strömt.

2. Halterungsvorrichtung nach Anspruch 1, **dadurch gekennzeichnet, daß** die als umhüllter mediendichter Hohlraum (11) ausgebildete Wand aus einer schlauchartigen Kunststoffolie (8) oder aus zusammengefügten extrusionsgeblasenen oder spritzgegossenen Hohlformkörperbauteilen mit flexiblen Abschnitten, die mit dem einzustellenden Gefäß (5) in Berührungskontakt gelangen, besteht.

3. Halterungsvorrichtung nach einem der Ansprüche 1 oder 2, **dadurch gekennzeichnet, daß** die schlauchartige Kunststoffolie (8) aus zwei miteinander verbundenen Folien besteht, wobei die Folie, die mit dem Gefäß (5) in Berührungskontakt gelangt, mehrere zur Mitte des Aufnahmebehälters (1) gerichtete, tiefgezogene Ausbuchtungen (9) aufweist.

4. Halterungsvorrichtung nach einem der Ansprüche 1 bis 3, **dadurch gekennzeichnet, daß** in dem Aufnahmebehälter (1), am Boden (2) mehrere Stege (10) in einem geringen Abstand zur Wand (2) des Aufnahmebehälters (1) angeordnet sind, wobei die schlauchartige Folie (8) zwischen den Stegen (10) und der Behälterwand (2) fixiert ist.

5. Halterungsvorrichtung nach einem der Ansprüche 1 bis 4, **dadurch gekennzeichnet, daß** der Verbindungskanal (7) zur Verbindung der schlauchartigen Folie (8) mit der Ausgleichskammer (6) als Ventil ausgebildet ist.

6. Halterungsvorrichtung nach einem der Ansprüche 1 bis 5, **dadurch gekennzeichnet, daß** die innere Wand aus mehreren flexiblen Wandabschnitten (9) oder deformierbaren Bereichen besteht.

7. Halterungsvorrichtung nach einem der Ansprüche 1 bis 6, **dadurch gekennzeichnet, daß** die flexible innere Wand, die flexiblen Wandabschnitte (9) oder die deformierbaren Bereiche aus einer elastischen, dehnbaren Kunststoffolie bestehen.

8. Halterungsvorrichtung nach einem der Ansprüche 1 bis 7, **dadurch gekennzeichnet, daß** zwischen den flexiblen Wandabschnitten (9) oder den deformierbaren Bereichen der inneren Wand stabile Wandabschnitte (10) angeordnet sind.

9. Halterungsvorrichtung nach einem der Ansprüche 1 bis 8, **dadurch gekennzeichnet, daß** die Ausgleichskammer (6) als Balgen ausgebildet ist, dessen bewegliche Schmalseiten (12) in verschiedenen Stellungen verrastbar sind.

10. Halterungsvorrichtung nach einem der Ansprüche 1 bis 9, **dadurch gekennzeichnet, daß** die beweglichen Bauteile (12) der Ausgleichskammer (6) zur Bildung des erforderlichen statischen Druckes unter einer Vorspannung (13) stehen.

11. Halterungsvorrichtung nach einem der Ansprüche 1 bis 10, **dadurch gekennzeichnet, daß** das fluide Medium eine hydraulische Flüssigkeit ist.

12. Halterungsvorrichtung nach einem der Ansprüche 1 bis 11, **dadurch gekennzeichnet, daß** das fluide Medium Luft ist.

## Claims

1. Holding device for carrying containers in automobiles, in particular beverage cans, bottles or cups, comprising a receptacle (1) to receive such container (5), with a rigid outer wall (2) and a flexible inner wall (8, 9) with adaptable expansion to maintain constant contact to the container (5) to be received, where either a fluid-proof hollow space (11) is formed between the flexible inner wall (8, 9) and the outer wall (2) of the receptacle (1) or the inner wall (8, 9) as such is building an envelop to form such fluid-proof hollow space (11), **characterized in that** the hollow space (11) is constantly connected with at least one compensation chamber (6) the volume of which can change, whereby compensation chamber (6) and hollow space (11) are forming a closed-circuit system in which a pre-defined quantity of fluid is contained In either the compensation chamber (6) and/or the hollow space (11), such fluid being flowing between the inner wall (8, 9) and the compensation chamber (6) or the hollow space (11) in order to adapt to the various expansion levels required.

2. Holding device according to claim 1, **characterized in that** the wall, in which the hollow space (11) is formed as a fluid-proof envelop, is built by flexible sections made of tube-shaped plastic film (8) or extrusion blown or moulded hollow components that come in contact with the container (5) to be received.

3. Holding device according to one of the claims 1 or 2, **characterized in that** the tube-shaped plastic film (8) is made of two sheetings connected to each other, in which the sheeting that comes in contact with the container (5) has several deep-drawn bulges (9) facing the centreline of the receptacle (1).

4. Holding device according to one of the claims 1 to 3, **characterized in that** several webs (10) are arranged In the bottom area (2) inside the receptacle (1) close to the wall (2) of the receptacle (1), whereby the tube-shaped film (8) is fixed in place between the webs (10) and the receptacle's wall (2).

5. Holding device according to one of the claims 1 to 4, **characterized in that** the connecting duct (7) to connect the tube-shaped plastic film (8) with the compensation chamber (6) is designed to act as a valve.

6. Holding device according to one of the claims 1 to 5, **characterized in that** the inner wall consists of several flexible wall sections (9) or deformable areas.

7. Holding device according to one of the claims 1 to 6, **characterized in that** the flexible inner wall, the flexible wall sections (9) or the deformable areas are made of an elastic, expandable plastic film material.

8. Holding device according to one of the claims 1 to 7, **characterized in that** rigid wall sections (10) are placed between the flexible wall sections (9) or the deformable areas of the Inner wall.

9. Holding device according to one of the claims 1 to 8, **characterized in that** the compensation chamber (6) is designed as a bellow-type unit the flexible narrow sides of which can be arrested in different positions.

10. Holding device according to one of the claims 1 to 9, **characterized in that** pre-stress (13) is applied to the movable components (12) of the compensation chamber (6) in order to build up the required static pressure.

11. Holding device according to one of the claims 1 to 10, **characterized in that** the fluid is a hydraulic liquid.

12. Holding device according to one of the claims 1 to 11, **characterized in that** air is employed as a fluid.

## Revendications

1. Dispositif de fixation pour contenants, notamment pour canettes, bouteilles ou gobelets de boisson, placé dans les véhicules automobiles, composé d'un conteneur (1) pour le contenant à insérer (5) présentant une paroi extérieure stable (2) et une paroi intérieure (8, 9) souple à élargissement modifiable qui est contact avec le contenant à loger (5), et il se forme un espace creux (11) étanche au fluide entre la paroi intérieure souple (8, 9) et la paroi extérieure (2) du conteneur (1), ou la paroi intérieure (8, 9) est configurée en espace creux (11) enveloppé et étanche au fluide, **caractérisé en ce que** l'espace creux (11) est relié constamment à au moins une chambre de compensation (6) au volume modifiable, la chambre de compensation (6) et l'espace creux (11) formant un système fermé, et une quantité définie d'agent fluide s'écoulant dans la chambre de compensation (6) ou l'espace creux (11) pour régler les différents élargissements de la paroi intérieure (8, 9) se trouvant dans la chambre de compensation (6) et/ou l'espace creux (11).

2. Dispositif de fixation selon la revendication 1, **caractérisé en ce que** la paroi configurée en espace creux (11) enveloppé et étanche au fluide se compose d'un film tubulaire souple de matière plastique (8) ou d'éléments moulés creux assemblés les uns aux autres et fabriqués par extrusion-soufflage ou moulage par injection qui présentent des segments souples qui sont en contact avec le contenant (5) devant être inséré.

3. Dispositif de fixation selon l'une quelconque des revendications 1 ou 2, **caractérisé en ce que** le film tubulaire souple de matière plastique (8) se compose de deux filme assemblés l'un avec l'autre, le film qui est contact avec le contenant (5) présentant plusieurs évidements (9) emboutis, dirigés vers le centre du conteneur (1).

4. Dispositif de fixation selon l'une quelconque des revendications 1 à 3, **caractérisé en ce que** plusieurs nervures (10) sont disposées dans le fond (2) du conteneur (1) en étant faiblement écartées de la paroi (2) du conteneur (1), le film tubulaire souple (8) étant fixé entre les nervures (10) et la paroi du conteneur (2).

5. Dispositif de fixation selon l'une quelconque des revendications 1 à 4, **caractérisé en ce que** le canal de jonction (7) destiné à relier le film tubulaire souple (8) à la chambre de compensation (6) est configuré en vanne.

6. Dispositif de fixation selon l'une quelconque des revendications 1 à 5, **caractérisé en ce que** la paroi intérieure se compose de plusieurs segments de paroi souple (9) ou plusieurs zones déformables.

7. Dispositif de fixation selon l'une quelconque des revendications 1 à 6, **caractérisé en ce que** la paroi intérieure souple, les segments de paroi souple (9) ou les zones déformables se composent d'un film de matière plastique élastique extensible.

8. Dispositif de fixation selon l'une quelconque des revendications 1 à 7, **caractérisé en ce que** des segments de paroi stable (10) sont disposés entre les segments de paroi souple (9) ou les zones déformables de la paroi intérieure.

9. Dispositif de fixation selon l'une quelconque des revendications 1 à 8, **caractérisé en ce que** la chambre de compensation (6) est configurée en soufflet dont les faces étroites mobiles (12) peuvent s'enclencher dans plusieurs positions.

10. Dispositif de fixation selon l'une quelconque des revendications 1 à 9, **caractérisé en ce que** les composants mobiles (12) de la chambre de compensation (6) sont soumis à une prétension (13) afin de créer la pression statique nécessaire.

11. Dispositif de fixation selon l'une quelconque des revendications 1 à 10, **caractérisé en ce que** l'agent fluide est un liquide hydraulique.

12. Dispositif de fixation selon l'une quelconque des revendications 1 à 11, **caractérisé en ce que** l'agent fluide est l'air.
